# EUROPÄISCHE PATENTANMELDUNG

(11) **EP 2 960 707 A1**
(43) Veröffentlichungstag der Anmeldung: **30.12.2015**
(21) Anmeldenummer: 15401060.7
(22) Anmeldetag: 26.06.2015
(51) Int. Cl.: G02B 23/04, G02B 23/12, G03B 17/48, G03B 33/12, G02B 5/04, G02B 23/10

(54) **ZWISCHENRIEGEL-MODUL MIT BILDSENSOR**

(30) Priorität: 27.06.2014 DE 102014109095
(71) Anmelder: Leica Camera AG, 35578 Wetzlar (DE)
(72) Erfinder: Kammans, Sigrun, 35745 Herborn (DE)
(74) Vertreter: Stamer, Jan

(57) **Zusammenfassung**

Zwischenriegel-Modul mit Bildsensor für Fernrohre mit auswechselbaren Okularen, bestehend aus einem zylindrischen Gehäuse, das in Lichtrichtung eine erste und eine zweite senkrecht zur Zylinderachse stehende Anschlagebene mit zugehörigen Verbindungselementen zum Fernrohrkörper und zum auswechselbaren Okular aufweist und bei dem das Gehäuse des Zwischenriegel-Moduls eine im Abstand vor der ersten Anschlagebene angeordnete Relay-Linse negativer Brechkraft und einen Vergrößerungsfaktor ß' aufweist, wobei der Relay-Linse (4) in dem Raum vor der zweiten Anschlagebene eine schräg zur Zylinderachse stehende Strahlteiler-Fläche (11) nachgeordnet ist, das Gehäuse im Querschnitt an den Fernrohrkörper angepasst und alle Elemente zur Bildaufnahme innerhalb des Gehäuses angeordnet sind.

## Beschreibung

Die Erfindung betrifft ein Zwischenriegel-Modul mit Bildsensor.

Aus der älteren Patentanmeldung DE 10 2014 102 638.1 ist ein Schnittweiten-Extender bekannt, wobei der Abstand und die Brennweite einer Relay-Linse so gewählt sind, dass eine relativ zur ersten Anschlagebene vorgegebene Objektebene O um den Faktor β' vergrößert in eine Bildebene O' mit gleicher Relativlage zur zweiten Anschlagebene verlagert wird und wobei der Abstand B zwischen der ersten und der zweiten Anschlagebene gleich dem Betrag der Schnittweiten-Verlagerung O-O' ist.

Wie aus der Druckschrift DE 10 2005 005 803 A1 allgemein bekannt ist, besteht bei Fernrohren allgemein der Bedarf, das im Okular beobachtete Bildfeld ohne großen Umbau fotografisch aufzunehmen und/oder mit anderen Interessenten auszutauschen. Dazu ist insbesondere eine digitale Bildaufzeichnung geeignet.

Bekannt sind Fotoadapter für Spiegelreflexkameras, die anstelle des Fernrohr-Okulars an dem Fernrohr befestigt werden. Der Wechsel solcher Vorrichtungen ist umständlich. Die gleichzeitige Betrachtung und Aufnahme des Bildes sind nicht möglich.

Ebenso bekannt sind Adapter für Digitalkameras, die auf das Okular des Fernrohres aufgesetzt werden. Auch hierbei ist ein Wechsel sehr aufwändig und die Ausrichtung des Adapters erfordert eine sorgfältige Justierung. Eine gleichzeitige Beobachtung durch das Okular hindurch ist bei aufgesetztem Adapter nicht möglich.

Bekannt ist auch die äußere Adaption einer handelsüblichen Kamera an dem Okular zur Aufnahme eines aus dem Okularstrahlengang ausgekoppelten Bildstrahlenganges. Die Adaptervorrichtung und die Kamera stellen eine erhebliche Belastung des Fernrohres dar, die die freihändige Handhabung behindert. Der ausgekoppelte Strahlengang muss ein zweites Okular beinhalten, welches einen erheblichen optischen Aufwand und dauerhafte Transmissionsverluste bedeutet.

Eine aus der Druckschrift DE 20 2006 004 094 U1 bekannte andere Möglichkeit besteht in der Auskopplung eines Digitalstrahlenganges innerhalb des Fernrohrkörpers durch Strahlteilerprismen oder -spiegel. Der feste Einbau dieser Auskoppelelemente in den Beobachtungsstrahlengang des Fernrohres hat einen dauerhaften Transmissionsverlust des Fernrohres zur Folge.

Aus der Druckschrift US 2009/0040600 A1 ist ein Teleskop-Adapter zum Tragen einer Kamera bekannt. Der Teleskop-Adapter weist eine Anriegelfläche mit Befestigungselementen zum Anriegeln an ein Teleskop anstelle eines Okulars auf. Der Adapter enthält Lichteintrittsseitig eine Linsenanordnung negativer Brechkraft zur Verlängerung der Abbildungslänge des Teleskop-Objektivs. In den verlängerten Abbildungsstrahlengang ist ein Strahlenteiler zur Erzeugung eines Beobachtungsstrahlenbündels und eines Bildaufnahmestrahlenbündels eingesetzt. Die Beobachtung erfolgt über ein Okular-Linsensystem positiver Brechkraft und die Bildaufnahme über ein Bildaufnahme-Linsensystem positiver Brechkraft als Teile des Teleskop-Adapters. Das Bildaufnahme-Linsensystem ist wie ein Okular-Linsensystem aufgebaut, um für das Kamera-Objektiv ebenfalls ein im Unendlichen liegendes Bild zu erzeugen.

Die Tragevorrichtung zur Befestigung der Kamera an dem Adapter ist mechanisch aufwendig und steht mit dem Gehäuse für das Bildaufnahme-Linsensystem einseitig in größerer Länge aus dem Adapter hervor, wodurch einerseits der Einblick in das BeobachtungsOkular und Balance beim Halten des Teleskops und andererseits ein Vorbeiblicken am Teleskop vorbei, behindert werden.

Aus der Druckschrift US 2003/0197929 A1 ist ein binokulares Fernglas mit Bildaufnahme aus einem der beiden Fernrohrtuben heraus bekannt. Vor den Okularen des binokularen Fernglases sind aus einem ersten und einem zweiten Prisma bestehende Prismensysteme angeordnet, die einerseits den Strahlengang von den Objektiven aufnehmen und andererseits den Strahlengang in die Okulare weiterleiten. Eines dieser Prismen in einem der beiden Fernrohrtuben enthält eine Teilerfläche zum seitlichen Auskoppeln eines Bildaufnahmestrahlenganges. Da die Bildaufnahme nur aus einem der Fernrohrtuben heraus erfolgt, ist die Bildhelligkeit des beobachteten Bildes in diesem Fernrohrtubus geringer als in dem anderen Fernrohrtubus, was die Bildaufnahme über die Augen beeinträchtigt. Das System zur Bildaufnahme ist starr in das binokulare Fernglas integriert.

Der Erfindung lag daher die Aufgabe zugrunde, die Möglichkeit einer Bildauskopplung aus dem Beobachtungsstrahlengang eines Fernrohres zu schaffen, die einfach auswechselbar und kostengünstig in ein vorhandenes Fernrohr integrierbar ist und die normale Beobachtung sowohl in der Handhabung als auch in der Bilddarstellung nur geringfügig beeinflusst. Die Transmission des Fernrohrkörpers sollte ohne Bildauskopplung vollständig erhalten bleiben und die visuelle Beobachtung sollte auch bei der Bildaufnahme erhalten bleiben.

Diese Aufgabe wird bei einem Zwischenriegel-Modul mit Bildsensor erfindungsgemäß durch die Merkmale des Anspruchs 1 gelöst. Vorteilhafte Weiterbildungen ergeben sich aus den Merkmalen der Unteransprüche.

Der aus der zitierten älteren Anmeldung bekannte Schnittweiten-Extender kann in einfacher Weise an einem Fernrohr mit auswechselbaren Okularen vor das Okular geriegelt werden. Die in den Extender integrierte Relay-Linse verlängert die Schnittweite des Fernrohres und schafft zusätzlich einen Vergrößerungsfaktor für die Beobachtungsoptik. Der durch die Schnittweiten-Verlängerung erzeugte zusätzliche Einbauraum wird für eine Bildauskopplung genutzt. Die Bildauskopplung wird durch eine schräg zum Beobachtungsstrahlengang stehende Strahlteiler-Fläche bewirkt. Bei der Bildauskopplung kann der gesamte oder zumindest ein großer Teil des Fernrohrsehfeldes als Bild im Quer- und/oder Hochformat erfasst werden. Das Gehäuse des Zwischenriegel-Moduls ist an den Querschnitt des Fernrohrkörpers angepasst und enthält alle Elemente zur direkten Bildaufnahme. Die Handhabung des Fernrohres bei der visuellen Beobachtung und Bildaufnahme ist wesentlich erleichtert Die Strahlteiler-Fläche kann vorzugsweise plan sein. Sie kann aber auch gekrümmt sphärisch, elliptisch oder frei geformt ausgebildet sein, um bereits einen Teil oder die gesamte Bildfokussierung auf einen Aufnahme-Sensor zu bewirken.

Der Träger der Strahlteiler-Fläche kann aus einem dünnen teildurchlässigen Spiegel oder einer Prismenfläche bestehen. Auch ein Prismensystem mit einer oder mehreren Freiformflächen ist nutzbar.

Die an der Strahlteiler-Fläche ausgekoppelten Abbildungsstrahlen können durch umlenkende und/oder abbildende Elemente vorzugsweise auf einen digitalen Bildsensor abgebildet werden. Die optische Achse des Strahlenbündels wird an der Strahlteiler-Fläche vorzugsweise um 90° umgelenkt, kann aber auch um einen flacheren oder steileren Winkel abgelenkt werden.

Das vom Bildsensor aufgenommene Bild kann weiterverarbeitet und angezeigt werden, wobei in dem Gehäuse des Zwischenriegel-Moduls ein integrierter Prozessor und eine integrierte Schnittstelle vorhanden sein können. Über einen in das Gehäuse integrierten Prozessor und eine integrierte Schnittstelle kann auch ein externes Display angesteuert werden. Dem Bildsensor kann aber auch nur eine integrierte Schnittstelle zugeordnet sein, die über einen externen Prozessor ein externes Display ansteuert. Die Schnittstelle kann auch die Verbindung zu einem externen, möglicherweise mobilen Kommunikationsgerät zur Weiterleitung der Bildinformation oder zusätzlicher Daten herstellen, wobei das Kommunikationsgerät auch an dem Gehäuse des Zwischenriegel-Moduls fest oder lösbar befestigt sein kann. Die integrierte Schnittstelle kann einen Kabelanschluss und/oder eine Wireless-Verbindung bedienen, wobei an sich bekannte und gebräuchliche Anschlüsse und Protokolle genutzt werden können. Ebenso können gebräuchliche Anschlüsse und Elemente für die interne und/oder externe Stromversorgung der elektronischen Bauteile verwendet werden.

Ein weiterer Vorteil dieser Anordnung besteht darin, dass bei der zu erwartenden schnellen Weiterentwicklung der Sensor- und Bildbearbeitungs-Technik mit Prozessoren die weitgehend ausgereifte Technik des Fernrohres beibehalten werden kann und nur das Bildaufnahme-Modul ausgetauscht oder das Zwischenriegel-Modul angepasst werden müssen.

Externe mobile Anzeigegeräte können so wie gerade vorhanden benutzt oder jederzeit gegen andere ausgetauscht werden. Das optische Bild-Auskopplungssystem kann auf eine optimale Bildsensorgröße angepasst werden, wobei mit dem abbildenden Spiegel-, Umlenk- und Linsensystem gute Möglichkeiten für eine Bildfehlerkorrektur zur optimalen Bildaufnahme bestehen.

Ein Teil des Zwischenriegel-Moduls kann um die optische Achse der Relay-Linse herum gegenüber einem Okulareinblick drehbar angeordnet sein, um einen einfachen Übergang zwischen einer Bildaufnahme im Quer- oder Hoch-Format zu erzeugen, ohne die visuelle Bildbeobachtung zu stören.

In der Zeichnung sind Ausführungsbeispiele des Zwischenriegel-Moduls mit Bildstrahlen-Auskopplung schematisch dargestellt und werden nachfolgend anhand der Figuren beschrieben. Dabei zeigen:
- Fig.1: einen okularseitig an einem Fernrohr zwischengeschaltetes Zwischenriegel-Modul,
- Fig.2: die optischen Elemente zur Bildstrahlen-Auskopplung im Detail und
- Fig.3a-f: Varianten zur Ausgestaltung der Bildstrahlen-Auskopplung.

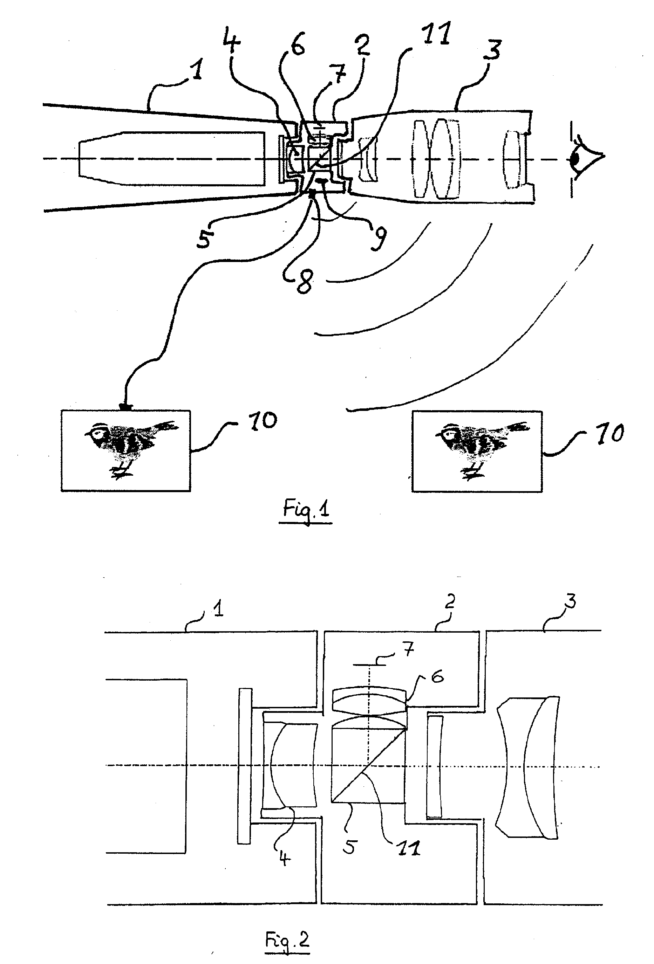

Fig. 1 zeigt ein an einem Fernrohrkörper 1 okularseitig angeriegeltes Zwischenriegel-Modul 2 mit daran angeriegeltem Wechselokular 3. Das Zwischenriegel-Modul 2 enthält lichteingangsseitig eine Relay-Linse 4 negativer Brechkraft. Der Relay-Linse 4 nachgeordnet ist ein Strahlenteiler 5, dessen Strahlenteiler-Fläche als Diagonalfläche in einem Prismenwürfel angeordnet ist.

Die an dem Strahlenteiler 5 reflektierten Bildstrahlen werden über eine Abbildungsoptik 6 direkt auf einen digitalen Bildsensor 7 fokussiert. Anstelle oder innerhalb der dargestellten Linsenoptik können auch an sich bekannte DOEs oder GRIN-Linsen, sowie Asphären eingesetzt werden.

An einer äußeren Fläche des Zwischenriegel-Moduls 2 sind ein nicht weiter dargestelltes Display und ein Stecker 8 für ein externes Display 10 zur Darstellung des vom Bildsensor 7 aufgenommenen Bildes angeordnet. Ein ebenfalls im Gehäuse des Zwischenriegel-Moduls 2 angeordnetes Kommunikationsgerät 9 dient der drahtlosen Übertragung des Bildes auf ein anderes externes Display 10. Der zur Bildbearbeitung notwendige Prozessor und eine Schnittstelle zur Datenkommunikation sind nicht weiter dargestellt. Auch eine übliche Speicher- oder Einspeiseeinrichtung zur elektrischen Versorgung der elektronischen Geräte ist nicht dargestellt. Solche Elemente sind in miniaturisierten Ausführungen handelsüblich und können ebenfalls im und/oder am Gehäuse des Zwischenriegel-Moduls angebracht sein.

Fig. 2 zeigt die optischen Elemente zur Bildstrahlen-Auskopplung nochmals im Detail. Die Strahlenteiler-Fläche 11 ist als Diagonalfläche in einem aus zwei rechtwinkligen Prismen gebildeten Strahlenteiler 5 ausgebildet. Die Strahlumlenkung beträgt 90°. Die nachfolgende Abbildungsoptik 6 dient der Abbildung des Bildstrahlenbündels auf einen Sensor 7. Die Fläche des Sensors 7 ist so ausgebildet und angeordnet, dass vorzugsweise ein Bild im Querformat aus dem im Okular 3 beobachteten Bildfeld erzeugt werden kann. Zur Aufnahme im Hochformat kann dann der Fernrohrkörper 1 mit angesetztem Zwischenriegel-Modul 2 und Okular 3 um die optische Achse des Beobachtungssystems gedreht werden.

Insbesondere bei Fernrohren mit abgewinkeltem Okulareinblick ist das unbequem. Für diesen Fall können entweder das Gehäuse des Zwischenriegel-Moduls 2 oder zumindest der Teil des Zwischenriegel-Moduls 2 mit Relay-Linse 4, dem Strahlenteiler 5, der Abbildungsoptik 6 und dem Bildsensor 7 als gegenüber dem Okulareinblick drehbarer Zwischentubus ausgebildet sein.

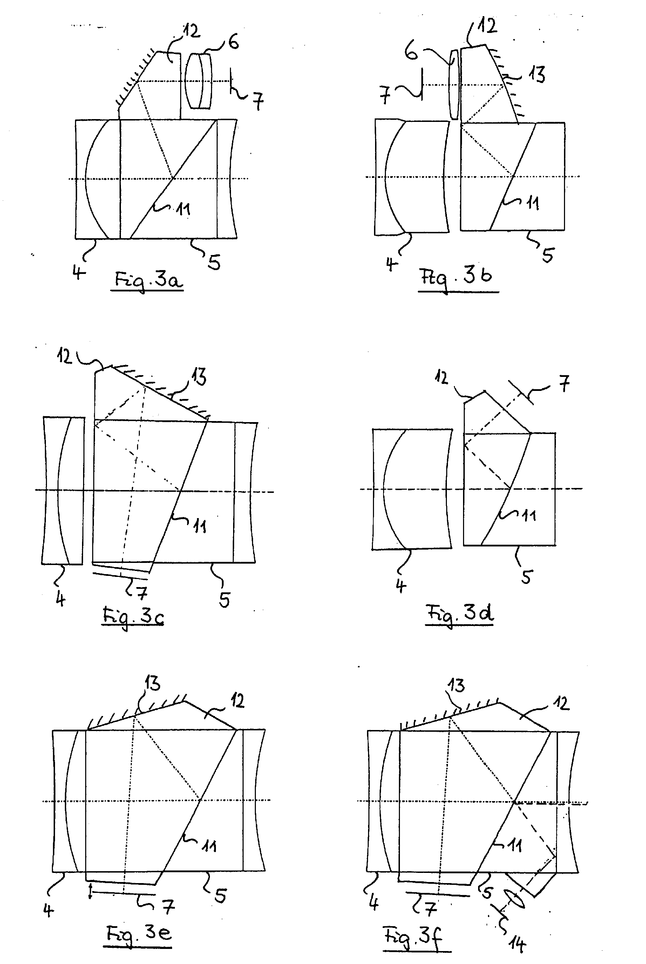

In den Fig. 3a bis 3f sind Varianten zur Ausgestaltung der Bildstrahlen-Auskopplung dargestellt.

In der Ausführung nach Fig. 3a wird das an der Strahlenteiler-Fläche 11 reflektierte Bildstrahlenbündel nochmals an einem auf den Strahlenteiler 5 aufgekitteten Prisma 12 parallel zur Beobachtungsrichtung des Fernrohres umgelenkt. Die notwendige Abbildungslänge zum Sensor 7 kann auf diese Weise besser im Gehäuse des Zwischenriegel-Moduls 2 untergebracht werden und es ist der Einsatz einer einfacher gestalteten Abbildungsoptik 6 möglich. Die Relay-Linse 4 und der Strahlenteiler 5 sind miteinander verkittet. Das vermindert Reflexionsverluste an den optischen Übergangsflächen.

Bei der in Fig. 3b dargestellten Anordnung ist die Reflexionsfläche 13 des Prismas 12 gekrümmt und unterstützt damit die Abbildungsleistung der Abbildungsoptik 6, die nochmals einfacher gestaltet werden kann.

Bei der in Fig. 3c dargestellten Anordnung sind die Strahlenteilerfläche 11 so geneigt und das Prisma 12 so auf den Strahlenteiler 5 aufgekittet, dass eine Rückreflexion der Abbildungsstrahlen durch den Strahlenteiler 5 hindurch erfolgt. Die Länge des Abbildungsweges zum Sensor 7 hin ist der Schnittweiten-Verlängerung durch die Relay-Linse 4 angepasst und erfordert daher keine zusätzliche Abbildungsoptik. Um einen senkrechten Strahlaustritt aus dem Strahlenteiler 5 zu gewährleisten ist ein Keilprisma in dem Strahlaustrittsbereich aufgekittet. Anstelle der Verkittung von einzelnen Prismen können diese auch als einstückiges Bauelement hergestellt werden. Gegenüber der Relay-Linse 4 ist ein Luftspalt einzuhalten, um die vollständige Reflektion innerhalb der Auskoppel- und Umlenkanordnung zu gewährleisten.

Bei der in Fig. 3d gezeigten Anordnung ist die Strahlenteilerfläche 11 in dem Strahlteiler 5 als Freiform oder als eine nicht rotationssymmetrische, insbesondere anamorphotische Fläche gekrümmt. Das aus dem Strahlteiler 5 austretende Strahlenbündel wird über ein aufgekittetes Prisma 12 mit zur Strahlrichtung senkrecht stehender Austrittsfläche auf den Sensor 7 gelenkt.

Die Anordnung nach Fig. 3e entspricht der Anordnung nach Fig. 3c, jedoch mit gegenläufiger Neigung der Reflexionsfläche 13 und verringerter Anzahl innerer Reflektionen durch Verlagerung der Reflektionsfläche längs der Beobachtungsachse des Fernrohres. Wegen der geänderten Reflektionswege können in diesem Fall die Relay-Linse 4 und der Strahlenteiler 5 auch miteinander verkittet sein. Das verbessert die Transmission und vermeidet insbesondere innere Reflektionen, die Falschlicht verursachen.

Die Anordnung nach Fig. 3f zeigt eine Weiterbildung der Anordnung nach Fig. 3e. Das über den Sensor 7 aufgenommene Bild und/oder monochromatische Rahmen und/oder Masken können auf einem Bildschirm 14 elektronisch angezeigt werden. Ergänzend kann in die Bilddarstellung eine an sich bekannte Lupendarstellung eingeblendet werden. Der Bildschirm 14 kann dann nach rückseitiger Reflektion der Bildstrahlen an der Strahlteilerfläche 11 im hier nicht dargestellten Okular beobachtet werden.

Die Fokussierung eines Fernrohres auf unterschiedliche Objektentfernungen erfolgt üblicherweise über eine Verstellung optischer Glieder innerhalb des Fernrohrkörpers. Die Bildschärfe wird vom Beobachter durch Einblick in das Okular visuell beurteilt. Dabei wird in der Grundeinstellung der Optik von keiner Fehlsichtigkeit des Beobachters ausgegangen. Eine beim Beobachter vorhandene Fehlsichtigkeit führt bei der erfindungsgemäßen Anordnung dann jedoch bei einer subjektiven Beobachtungsschärfe zu einer objektiven Unschärfe auf dem Bildsensor 7.

Wie bei dem Ausführungsbeispiel nach Fig. 3e durch Pfeile am Sensor 7 dargestellt, kann es daher zweckmäßig sein, dem Sensor 7 einen Autofokussensor zuzuordnen, der über eine Verstellvorrichtung oder eine vom Prozessor gesteuerte Bildbearbeitung eine scharfe Bildaufnahme sicherstellt.

### Bezugszeichenliste

- 1: Fernrohrkörper
- 2: Zwischenriegel-Modul
- 3: Okular
- 4: Relay-Linse
- 5: Strahlenteiler
- 6: Abbildungsoptik
- 7: Bildsensor
- 8: Stecker
- 9: Kommunikationsgerät
- 10: externes Display
- 11: Strahlenteilerfläche
- 12: Prisma
- 13: Reflexionsfläche
- 14: Bildschirm

## Patentansprüche

1. Zwischenriegel-Modul mit Bildsensor für Fernrohre mit auswechselbaren Okularen, bestehend aus einem zylindrischen Gehäuse, das in Lichtrichtung eine erste und eine zweite senkrecht zur Zylinderachse stehende Anschlagebene mit zugehörigen Verbindungselementen zum Fernrohrkörper und zum auswechselbaren Okular aufweist und bei dem das Gehäuse des Zwischenriegel-Moduls eine im Abstand vor der ersten Anschlagebene angeordnete Relay-Linse negativer Brechkraft und einen Vergrößerungsfaktor β' aufweist, wobei der Relay-Linse (4) in dem Raum vor der zweiten Anschlagebene eine schräg zur Zylinderachse stehende Strahlteiler-Fläche (11) nachgeordnet ist, das Gehäuse im Querschnitt an den Fernrohrkörper angepasst und alle Elemente zur Bildaufnahme innerhalb des Gehäuses angeordnet sind.

2. Zwischenriegel-Modul nach Anspruch 1, **dadurch gekennzeichnet, dass** die in Lichtrichtung vordere und die rückseitige Strahlteiler-Flächen (11) mit optisch transparenten Prismen mit senkrecht zur Zylinderachse stehenden Lichteintritts- und Lichtaustrittsflächen zu einem Strahlenteiler-Element (5) verbunden sind.

3. Zwischenriegel-Modul nach Anspruch 1 oder 2, **dadurch gekennzeichnet, dass** die Strahlteiler-Fläche (11) eine frei geformte Krümmung, insbesondere eine anamorphotisch abbildende Krümmung, aufweist.

4. Zwischenriegel-Modul nach einem der vorhergehenden Ansprüche, **dadurch gekennzeichnet, dass** in dem nach Eintreten in das Zwischenriegel-Modul an der Strahlenteiler-Fläche (11) reflektierten, aus dem Strahlenteiler-Element (5) austretenden Lichtbündel optische Umlenk- und/oder Abbildungselemente (6) mit einem in ihrer Abbildungsebene liegenden elektronischen Bildsensor (7) mit Prozessor angeordnet sind.

5. Zwischenriegel-Modul nach Anspruch 4, **dadurch gekennzeichnet, dass** die optischen Umlenk- und/oder Abbildungs-Elemente (6) und der Bildsensor (7) mit Prozessor innerhalb des Gehäuses angeordnet sind.

6. Zwischenriegel-Modul nach einem der Ansprüche 4 oder 5, **dadurch gekennzeichnet, dass** der Prozessor mit einer Datenübertragungs-Schnittstelle verbunden ist.

7. Zwischenriegel-Modul nach Anspruch 6, **dadurch gekennzeichnet, dass** über die Schnittstelle ein innerhalb und/oder außerhalb des Gehäuses angeordnetes Display (10) zur Darstellung des vom Bildsensor (7) aufgenommenen Bildes ansteuerbar ist.

8. Zwischenriegel-Modul nach Anspruch 7, **dadurch gekennzeichnet, dass** ein innerhalb des Gehäuses liegender Bildschirm (14) über die rückseitige Strahlenteiler-Fläche (11) beobachtbar ist.

9. Zwischenriegel-Modul nach Anspruch 7 oder 8, **dadurch gekennzeichnet, dass** über die Schnittstelle auf dem innerhalb des Gehäuses angeordneten Bildschirm (14) oder Display externe Kommunikations-Daten darstellbar sind.

10. Zwischenriegel-Modul nach einem der vorhergehenden Ansprüche, **dadurch gekennzeichnet, dass** das Gehäuse des Zwischenriegel-Moduls (2) oder ein den Strahlenteiler (5), die Abbildungsoptik (6) und den Bildsensor (7) enthaltender Zwischentubus des Zwischenriegel-Moduls (2) um die optische Achse der Relay-Linse (4) herum gegenüber einem Okulareinblick drehbar angeordnet sind.
